(19) Europäisches Patentamt
European Patent Office
Office européen des brevets

(11) **EP 3 102 851 B1**

(12) **EUROPÄISCHE PATENTSCHRIFT**

(45) Veröffentlichungstag und Bekanntmachung des Hinweises auf die Patenterteilung:
**06.01.2021   Patentblatt 2021/01**

(21) Anmeldenummer: **15709085.3**

(22) Anmeldetag: **22.01.2015**

(51) Int Cl.:
**F16H 25/24** *(2006.01)*          **H02K 7/116** *(2006.01)*
**F16D 37/02** *(2006.01)*

(86) Internationale Anmeldenummer:
**PCT/DE2015/200016**

(87) Internationale Veröffentlichungsnummer:
**WO 2015/113564 (06.08.2015 Gazette 2015/31)**

(54) **MAGNETORHEOLOGISCHER AKTOR MIT ROTATORISCH ANGETRIEBENER GEWINDESPINDEL UND KUPPLUNG MIT AKTOR**

MAGNETORHEOLOGICAL ACTUATOR HAVING A ROTATIONALLY DRIVEN THREADED SPINDLE, AND CLUTCH HAVING AN ACTUATOR

ACTIONNEUR MAGNÉTO-RHÉOLOGIQUE PRÉSENTANT UNE BROCHE FILETÉE ENTRAÎNÉE EN ROTATION, ET COUPLAGE PRÉSENTANT UN ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2014   DE 102014201835**

(43) Veröffentlichungstag der Anmeldung:
**14.12.2016   Patentblatt 2016/50**

(73) Patentinhaber: **Schaeffler Technologies GmbH & Co. KG**
**91074 Herzogenaurach (DE)**

(72) Erfinder: **BERTHELEMY, Pierre-Yves**
**F-67460 Souffelweyersheim (FR)**

(56) Entgegenhaltungen:
**US-A- 2 824 460     US-B1- 6 755 290**

**Beschreibung**

Die Erfindung betrifft einen magnetorheologischen Aktor mit einer Kammer, insbesondere mit einer zumindest abschnittsweise im Wesentlichen hohlzylinderförmigen Kammer, in der eine magnetorheologische Flüssigkeit aufgenommen ist, und einem Stellglied, das in der Kammer angeordnet ist, wobei das Stellglied eingerichtet ist, eine Betätigungskraft des Aktors auszuüben.

Solche Aktoren werden beispielsweise im Bereich der Kraftfahrzeugtechnik unter anderem zur Betätigung von Kupplungen bei manuellen oder automatischen Getrieben, Dämpfern oder Bremsen verwendet. Bei manuellen Getrieben besteht der Aktor meist aus einem hydraulischen System, das direkt durch den Fahrer betätigt wird. Eine hydraulische Strecke, die mit einer gewissen Übersetzung ausgelegt ist, überträgt die Betätigungsenergie von einem durch den Fahrer betätigten Pedal zu einem Ausrücker der Kupplung. Bei automatischen Getrieben oder Hybridantriebssträngen existieren zahlreiche unterschiedliche Betätigungsvorrichtungen oder Aktoren, die in Form von Kombinationen hydraulischer, mechanischer oder elektrischer Systeme realisiert sind.

Eine bekannte Verwendung magnetorheologischer Flüssigkeiten (im Folgenden auch kurz als MRF bezeichnet) sind Dämpfer, Bremsen und Kupplungen. Als magnetorheologische Flüssigkeit (MRF) bezeichnet man eine Suspension von magnetisch polarisierbaren Partikeln (z.B. Carbonyleisenpulver), die in einer Trägerflüssigkeit fein verteilt sind. Die MRF dient in solchen bekannten Anwendungen als direktes Kupplungs- bzw. Dämpfungs- bzw. Bremsfluid. Größe, Komplexität und/oder Kosten sind bei einer Integration in kompakte Kupplungen Hauptschwächen der genannten Systeme. Bekannte MRF-Kupplungen weisen insbesondere bei schnell rotierenden Anwendungen die Nachteile auf, dass eine vollständige Trennung der mittels der Kupplung verbundenen Stränge wie bei klassischen Kupplungen ist nicht möglich, da in der Kupplung durch die MRF stets Restreibung verbleibt, was wirkungsgradvermindernd ist, und dass die Fliehkraftwirkung auf Partikel der MRF zu einer Beeinträchtigung des Drehmomentverhaltens führen kann.

Aus der EP 1 438 517 B1 ist beispielsweise eine steuerbare Bremse bekannt, umfassend a) einen Rotor, der so ausgebildet ist, dass er auf seinem Umfang einen Arbeitsteil aufweist, der sich parallel zu einer Welle erstreckt, auf der der Rotor gelagert ist; b) eine Welle, auf der der Rotor so angebracht ist, dass eine Relativbewegung zwischen ihr und dem Rotor gehemmt wird; c) ein Gehäuse mit einer ersten Kammer, die den Rotor drehbar aufnimmt und einen Magnetfeldgenerator aufweist, der von dem Rotor mit Abstand getrennt ist und so ausgebildet und angeordnet ist, dass er einen magnetischen Fluss durch ein magnetisch steuerbares Material in einer Richtung lotrecht zu der Welle und zu dem Arbeitsteil des Rotors erzeugt, wobei d) das in der ersten Kammer befindliche magnetisch steuerbare Material mit wenigstens dem Arbeitsteil des Rotors in Berührung steht und die Bremse gekennzeichnet ist durch e) eine aktive Mittenrückführvorrichtung in der ersten Kammer, um den Rotor zu veranlassen, in eine relative Mittenposition zurückzukehren.

Aus der EP 2 060 800B1 ist ein kombinierter Aktor bekannt, aufweisend ein bewegliches Element, einen Antrieb zum Verschieben des beweglichen Elements entlang einem Pfad und eine rheologische Kontrollbremse, die an das bewegliche Element mechanisch gekoppelt ist, um die Verschiebung des beweglichen Elements entlang dem Pfad anzupassen, wobei der kombinierte Aktor dadurch gekennzeichnet ist, dass die rheologische Kontrollbremse mindestens zwei aneinander grenzende Nachstellkammern aufweist, eine magnetorheologische Flüssigkeit, die in den zwei Nachstellkammern enthalten ist, mindestens einen gleitenden Kolben, der die zwei Nachstellkammern undurchlässig voneinander trennt und mit dem beweglichen Element mechanisch verbunden ist, mindestens ein externes Verbindungsrohr, das die zwei Nachstellkammern wechselseitig verbindet und außerhalb der zwei Nachstellkammern selbst angeordnet ist, und eine antreibende Vorrichtung, die so an das äußere Verbindungsrohr gekoppelt ist, dass sie auf die im äußeren Verbindungsrohr enthaltene rheologische Flüssigkeit ein veränderliches Magnetfeld ausübt, um die Viskosität der rheologischen Flüssigkeit zwischen einem minimalen Wert, bei dem die rheologische Flüssigkeit frei durch das äußere Verbindungsrohr fließen kann, und einem maximalen Wert, bei dem die rheologische Flüssigkeit nicht durch das äußere Verbindungsrohr ließen kann, zu verändern, bei dem die antreibende Vorrichtung einen ferromagnetischen Kern in Form eines offenen Rings mit einer Unterbrechung aufweist, die einen Spalt definiert, in dem das äußere Verbindungsrohr angeordnet ist, mindestens eine Wicklung, die an den ferromagnetischen Kern gekoppelt ist, und einen elektrischen Generator, der an die Wicklung angeschlossen ist, um einen elektrischen Strom von verstellbarer Stärke in der Wicklung zirkulieren zu lassen.

Aus der WO 00/53936 A1 ist eine steuerbare pneumatische Vorrichtung bekannt, umfassend ein pneumatisches System beinhaltend einen pneumatischen Aktor mit einem Gehäuse, einem darin angeordneten und aufgrund einer auf diesen wirkenden Druckdifferenz beweglichen Kolben und wenigstens ein Ausgabeelement verbunden mit dem Kolben, und eine drehwirkende steuerbare Bremse, beinhaltend ein auf ein Feld ansprechendes Medium, wobei die drehwirkend steuerbare Bremse eine mit dem Ausgabeelement verbundene Achse beinhaltet, um dessen Bewegung zu steuern.

US6755290 offenbart einen Aktor mit den Merkmalen des Oberbegriffes des Anspruchs 1. Ausgehend von dem vorgenannten Stand der Technik ist die Aufgabe der vorliegenden Erfindung, eine neuartiges Betätigungskonzept und einen Aktor bereitzustellen, das bzw. der die vorgenannten Nachteile nicht aufweist und eine möglichst einfache und kompakte Konstruktion besitzt.

Diese Aufgabe wird bei einer gattungsgemäßen Kupplung erfindungsgemäß dadurch gelöst, dass das Stellglied eine um ihre Längsachse, insbesondere um die Schraubenachse, rotatorisch angetriebene Gewindespindel oder Schraube oder Gewindestange mit einem Spindelkern und einem darauf befindlichen Gewinde ist, und das Gewinde von der magnetorheologischen Flüssigkeit umgeben ist, wobei das Gewinde, insbesondere Gewindespitzen des Gewindes, eine Innenwand der Kammer dichtend kontaktiert. In diesem Fall ist eine Möglichkeit für eine Rückführung von MRF von einer Seite des Gewindes auf dessen andere Seite (in Längsrichtung betrachtet) erforderlich, damit sich das Gewinde bei flüssiger MRF ohne zu großen Widerstand darin drehen kann.

Das Gewinde kann in vorteilhafter Weise einen konstanten Außendurchmesser oder Nenndurchmesser aufweisen. Die Kammer kann zumindest abschnittsweise hohlzylinderförmig ausgebildet sein. Anders ausgedrückt kann der Aktor, insbesondere dessen Stellglied, ein Gewinde aufweisen, das auf der Antriebswelle axial verschieblich angeordnet und mit der Antriebswelle drehgekoppelt ist, dessen Gewindegänge in die magnetorheologische Flüssigkeit greifen. Diese ist im Aktor zur Antriebswelle axial lagefixiert aufgenommen, insbesondere im verfestigten Zustand im Aktor zur Antriebswelle axial lagefixiert aufgenommen. Die Erfindung ist ergo bei einer Kupplung etwa nach Art einer "normally closed"-Kupplung einsetzbar. Natürlich ist der Einsatz bei einer "normally open" Kupplung genauso denkbar.

Anders ausgedrückt betrifft die Erfindung ein neuartiges Betätigungssystem für Kupplungen, Bremsen oder ähnliche Anwendungen, bei denen zwei zueinander bewegliche Einheiten relativ zueinander zu positionieren sind. Das vorgestellte Prinzip kann für verschiedene Kupplungsarten eingesetzt werden, ist jedoch insbesondere für Reibkupplungen gut geeignet. Die derzeitige Entwicklung von Hybridantriebssträngen oder die Elektrifizierung von Nebenaggregaten verlangt heute immer mehr den Einsatz von kompakt steuerbaren Kupplungen, wie z.B. Riemenscheibenkupplungen. Der erfindungsgemäße Aktor ist für solche Anwendungen besonders gut geeignet.

Der erfindungsgemäße Aktor beruht auf einer Verwendung einer magnetorheologischen Flüssigkeit (MRF), die in Kombination mit einem Gewinde, insbesondere einer Gewindespindel, wirkt oder arbeitet. Dabei wird die MRF in einer innovativen Art verwendet. Sie wird nämlich anders als bekannt nicht direkt als Arbeitsmedium, z.B. Kupplungsfluid oder Bremsfluid, benutzt. Stattdessen wird sie genutzt, um eine Bewegung eines Stellgliedes für die zu betätigende Einheit zu bewirken. Dabei wird das Prinzip einer Archimedischen Schraube oder Schnecke mit den im Nachfolgenden genauer beschriebenen Eigenschaften einer MRF unter einem Magnetfeld kombiniert, um eine Umsetzung einer Drehbewegung des mit dem Gewinde wirkverbundenen Stellglieds in eine Axialbewegung des Stellglieds zu ermöglichen. Ein weiterer Aspekt ist, dass Energie, die zur Betätigung der mittels des Aktors bedienten Einheit erforderlich ist, als kinetische Energie im Aktor selbst gespeichert sein kann. Ein wesentlicher Vorteil des Aktors nach der Erfindung ist, dass eine MRF eine weitgehend lineare Änderung der Schubspannung in Abhängigkeit eines anliegenden Magnetfeldes zur Steuerung einer Verfestigung der MRF aufweist. Dadurch ist der Aktor besonders gut zu steuern bzw. zu regeln.

Zum besseren Verständnis wird das Verhalten einer MRF im Folgenden beschrieben. Eine MRF besteht im Wesentlichen aus einer Trägerflüssigkeit, beispielsweise Öl, in der magnetisch polarisierbare Partikel, z.B. einer Partikelgröße zwischen ca. 1 $\mu$m und 5 $\mu$m suspendiert sind. Zur Stabilisierung der MRF gegenüber Sedimentation, also einem Absetzten der Partikel, kann diese bestimmte chemische Additive enthalten. Ohne Einfluss eines Magnetfelds ist die MRF flüssig. Wird die MRF einem äußeren Magnetfeld ausgesetzt, kommt es in diesem aufgrund von Wechselwirkungen zwischen magnetischen Dipolen der Partikel zu einer Kettenbildung, also zur Bildung von Ketten aus aneinander "anhaftenden" Partikeln. Infolgedessen versteift sich die MRF innerhalb von Millisekunden und geht in einen verfestigten Zustand über. Entfällt das äußere Magnetfeld, bilden die Partikel keine magnetischen Dipole mehr aus und es kommt zu einer Verflüssigung, also Rückkehr in den flüssigen Zustand, der MRF.

Im verfestigten Zustand können MRF als Bingham Festkörper mit der folgenden Gleichung beschrieben werden:

$$\tau = \tau_0 + \eta\dot{\gamma}$$

Dabei steht $\tau$ für die Schubspannung, $\tau_0$ für die feldinduzierte Grenzscherspannung, $\eta$ für die dynamische Viskosität oder Basisviskosität und $\dot{\gamma}$ für die Schergeschwindigkeit. Eine graphische Darstellung der Abhängigkeit der Scherspannung von der Schergeschwindigkeit mit Bezug auf die magnetische Feldstärke eines anliegenden Magnetfelds ist dabei üblich. Aus dieser ergibt sich, dass sich die MRF ohne Magnetfeld bei einer Schergeschwindigkeit größer 0 wie eine Newtonsche Flüssigkeit verhält. Bei anliegendem Magnetfeld der Feldstärke B und einer Schergeschwindigkeit von 0 verhält sie sich wie ein Festkörper, solange die aufgebrachte Schubspannung kleiner als die feldinduzierte Grenzscherspannung ist. Bei anliegendem Magnetfeld der Feldstärke B und einer Schergeschwindigkeit größer 0 ist die MRF viskos. Diese Verfestigung der MRF unter einem Magnetfeld wird für die Abdichtung des erfindungsgemäßen Aktors genutzt.

Das dem Aktor zugrunde liegende Prinzip ist, dass das Gewinde in der MRF, wenn diese keinem Magnetfeld ausgesetzt und flüssig ist, weitgehend ungehindert rotieren kann, ohne dass dabei störende Axialkräfte auf das mit der MRF zusammenwirkende Gewinde erzeugt werden. Wird die MRF einem Magnetfeld ausgesetzt, kommt es zu deren Verfestigung. Das Gewinde kann dann nicht mehr ungehindert in der verfestigten MRF rotieren. Anders ausgedrückt übt die verfestigte MRF auf das Gewinde bei fortgesetzter Rotation Kräfte aus, ähnlich einer Mutter auf das Gewinde einer Schraube. Durch die Geometrie des Gewindes werden diese Kräfte in in axialer Richtung des Gewindes wirkende Längs- oder Schubkräfte umgewandelt, so dass bei einer entsprechenden axialverschieblichen Lagerung des Gewindes ein Axialversatz oder eine Axialverschiebung bewirkt werden kann.

Es ist von besonderem Vorteil, dass mit der Erfindung in einer Ausführungsform eine bislang nachteilige Eigenschaft einer MRF, die sogenannte Sedimentation, in vorteilhafter Weise ausgenutzt werden kann. Wird die MRF einem Magnetfeld ausgesetzt, kommt es zu deren Verfestigung. Die Belastbarkeit einer MRF im verfestigten Zustand hängt grundsätzlich von der Grenzscherspannung und der Scherfläche ab. Überschreitet eine auf die MRF ausgeübte Schubspannung die Grenzscherspannung, brechen die aus den polarisierten Partikeln der MRF gebildeten Ketten auseinander. Aufgrund des fortwährend wirkenden magnetischen Felds bilden sich die Ketten jedoch insbesondere in Bereichen mit geringerer Schubspannung sofort erneut. Dieser Umstand kann durch die Erfindung genutzt werden, um eine nahezu unbegrenzt hohe axiale Betätigungskraft des Aktors zu erzeugen. Wird eine Möglichkeit vorgesehen, dass hinter das Gewinde geförderte Trägerflüssigkeit der MRF zurück in einen Bereich vor dem Gewinde strömen kann (ähnlich einer Trennung von Partikeln und Trägerflüssigkeit bei Sedimentation), kann hinter dem Gewinde ein Poster aus infolge der fortwährenden Wirkung des Magnetfelds miteinander verketteten Partikeln der MRF aufgebaut werden, auf das sich das Gewinde mit hohen übertragbaren Kräften abstützen kann. Der hier genutzt Effekt wird später noch genauer beschrieben.

Vorteilhafte Ausführungsformen der Erfindung sind in den Unteransprüchen beansprucht und werden nachfolgend näher erläutert.

Die Gewindespindel kann in der Kammer in axialer Richtung verschiebbar aufgenommen sein. Sie kann darin insbesondere gelagert sein. Zu diesem Zweck ist es von Vorteil, wenn die axiale Länge des Gewindes kleiner ist als die axiale Länge der Kammer.

Es ist von Vorteil, wenn das Gewinde mehrgängig ist, insbesondere zwei-, drei- oder viergängig bis hin zu sechsgängig. Durch mehrgängige Gewinde kann dessen Förderleistung von MRF bzw. von polarisierbaren oder polarisierten Partikeln der MRF gegenüber einem eingängigen Gewinde erhöht werden, so dass der Aktor kurze und schnelle Ansprechzeiten besitzt, was für eine rasche / schnelle Betätigung von Kupplungen oder Bremsen erwünscht ist. Eine weitere zusätzliche oder alternative Möglichkeit zu Verbesserung des Förderverhaltens des Gewindes ist, dass sich der Innendurchmesser des Gewindes vom Durchmesser des Spindelkerns in einem Bereich außerhalb des Gewindes unterscheidet, insbesondere kleiner ist.

Es ist von besonderem Vorteil, wenn die Gewindespindel beiderseits des Gewindes zylinderförmige Spindelkernabschnitte aufweist, die einer Lagerung der Gewindespindel dienen. In diesem Fall befindet sich die Gewindespindel bei flüssiger MRF in einem hydraulischen Gleichgewicht, was für Dichtungen und Lagerungen von Vorteil ist.

Die Erfindung betrifft schließlich eine Kupplung oder eine Bremse, insbesondere eine Kfz-Kupplung oder Kfz-Bremse, mit einem Aktor nach der Erfindung, insbesondere nach einem der Ansprüche.

Die Erfindung wird nachfolgend mit mehreren Ausführungsbeispielen anhand von Zeichnungen näher erläutert. Dabei zeigen:

Fig. 1   eine schematische Darstellung eines magnetorheologischen Aktors, wobei sich eine im Aktor enthaltene magnetorheologische Flüssigkeit in einem flüssigen Zustand befindet,

Fig. 2   eine schematische Darstellung des Aktors der Figur 1, wobei sich die MRF in einem verfestigten Zustand befindet und eine Gewindespindel des Aktors still steht,

Fig. 3   eine schematische Darstellung des Aktors der Figuren 1 und 2, wobei sich die MRF in einem verfestigten Zustand befindet und die Gewindespindel rotiert,

Fig. 4   eine schematische Darstellung des Aktors der Figuren 1 bis 3, wobei sich die MRF in einem verfestigten Zustand befindet und die Gewindespindel weiter rotiert ist, verglichen zu dem in Figur 2 gezeigten Zustand,

Fig. 5   eine Prinzipskizze zur Übertragung von Druck mittels kleiner Partikel,

Fig. 6a   eine perspektivische Detailansicht einer nicht erfindungsgemäßen Ausführungsform der Gewindespindel des Aktors,

Fig. 6b   eine Draufsicht auf einen Gewindegang der Gewindespindel der Fig. 6a,

Fig. 7   eine Schnittansicht einer speziellen Ausführungsform einer Kupplung mit magnetorheologischem Aktor im gekuppelten Zustand,

Fig. 8   die Kupplung der Figur 7 im entkuppelten Zustand mit einem Detail zum Magnetfeld in Figur 8a,

Fig. 9   eine Schnittteilansicht einer zweiten Ausführungsform einer Kupplung mit magnetorheologischem Aktor,

Fig. 10   die Kupplung der Figur 9 im Stillstand,

Fig. 11   die Kupplung der Figuren 9 und 10 im Betrieb im gekuppelten Zustand,

Fig. 12   die Kupplung der Figuren 9 bis 11 im Betrieb zu Beginn des Entkuppelns,

Fig. 13 die Kupplung der Figuren 9 bis 12 im Betrieb im entkuppelten Zustand,

Fig. 14 die Kupplung der Figuren 9 bis 13 beim Ein- / Ankuppeln,

Fig. 15 eine Ausführungsform einer Hülse des Aktors der Kupplungen der Figuren 9 bis 14 in einer perspektiveschen Ansicht,

Fig. 16a eine alternative Ausführungsform des Aktors der Kupplungen der Figuren 9 bis 14 ohne Magnetfeldeinfluss,

Fig. 16b die alternative Ausführungsform des Aktors der Kupplungen der Figuren 9 bis 14 unter Magnetfeldeinfluss,

Fig. 17 eine besondere Ausführungsform einer Kupplung mit magnetorheologischem Aktor in einer Teilschnittansicht,

Fig. 18 eine erste Ausführungsform einer Dichtung für einen magnetorheologischen Aktor gemäß der Erfindung,

Fig. 19 eine zweite Ausführungsform einer Dichtung für einen magnetorheologischen Aktor gemäß der Erfindung,

Fig. 20a ein Detail zum Verschleißausgleich der Kupplung in einer Schnittansicht bei neuer Kupplung,

Fig. 20b ein Detail zum Verschleißausgleich der Kupplung in einer Schnittansicht bei verschlissener Kupplung,

Fig. 21a eine Ausführungsform einer Gewindespindel eines magnetorheologischen Aktors in einer seitlichen Detailansicht,

Fig. 21b die Ausführungsform einer Gewindespindel eines magnetorheologischen Aktors in einer perspektivischen Detailansicht,

Fig. 22a eine Ausführungsform einer nicht erfindungsgemäßen Gewindespindel eines magnetorheologischen Aktors in einer seitlichen Detailansicht,

Fig. 22b eine Ausführungsform einer nicht erfindungsgemäßen Gewindespindel eines magnetorheologischen Aktors in einer perspektivischen Detailansicht,

Fig. 23a eine Ausführungsform einer Gewindespindel eines magnetorheologischen Aktors in einer seitlichen Detailansicht,

Fig. 23b eine Ausführungsform einer Gewindespindel eines magnetorheologischen Aktors in einer perspektivischen Detailansicht,

Fig. 24a eine Ausführungsform einer Gewindespindel eines magnetorheologischen Aktors in einer seitlichen Detailansicht,

Fig. 24b eine Ausführungsform einer Gewindespindel eines magnetorheologischen Aktors in einer perspektivischen Detailansicht,

Fig. 25 ein Umdrehungs-Weg-Diagramm für verschiedene Ausführungsformen einer Gewindespindel,

Fig. 26 eine Darstellung des Prinzips eines Magnetpartikelpolsteraufbaus bei einem Aktor nach der Erfindung,

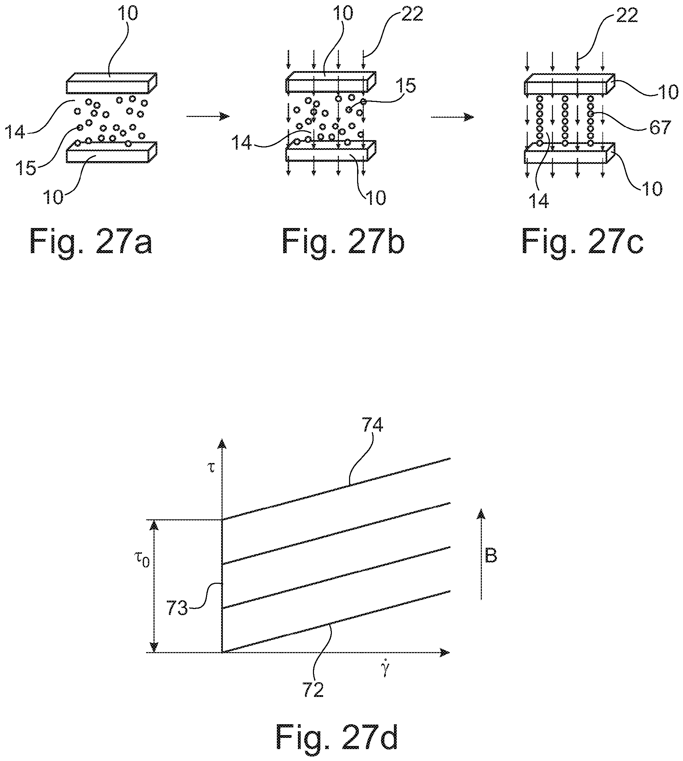

Fig. 27a - d Darstellungen zum Verhalten einer MRF, und

Fig. 28a - 28c Darstellungen zur Axialpositionierung des Aktors nach den Figuren 1 bis 4.

Die Figuren sind lediglich schematischer Natur und dienen nur dem Verständnis der Erfindung. Die gleichen Elemente sind mit denselben Bezugszeichen versehen. Details der unterschiedlichen Ausführungsformen können miteinander kombiniert werden.

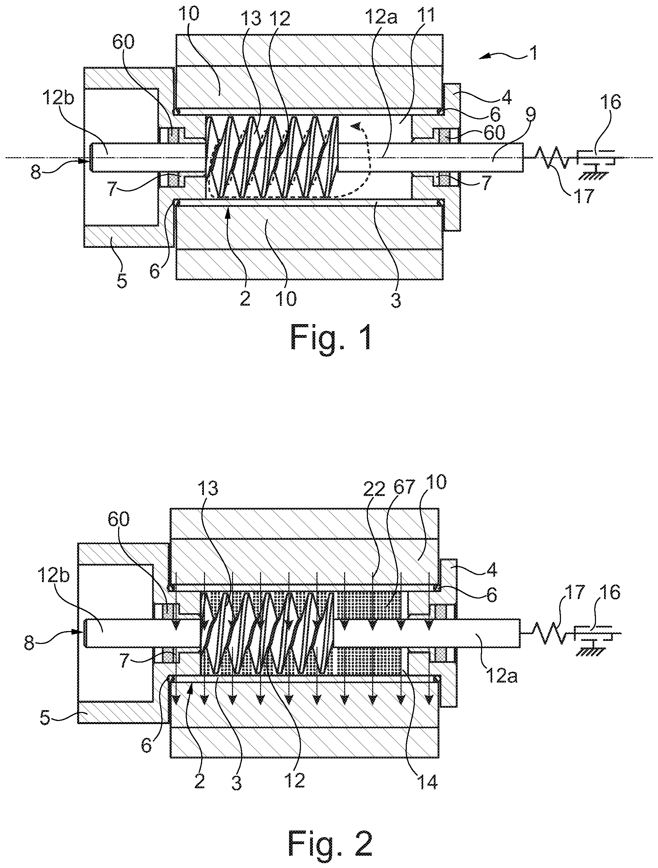

Figur 1 zeigt eine schematische Darstellung einer Ausführungsform eines magnetorheologischen Aktors 1 nach der Erfindung. Der Aktor 1 weist ein Gehäuse 2 auf, das aus einem hohlzylinderförmigen Rohr 3, einem rechten Deckel 4 und einem linken Deckel 5 besteht. Die Deckel 4, 5 können mit dem Rohr 3 verschraubt sein. Das Gehäuse 2 ist zwischen dem Rohr 3 und den Deckeln 4, 5 jeweils mittels eines O-Dichtrings 6 abgedichtet. In jedem Deckel 4, 5 ist eine Lageröffnung ausgebildet, in die jeweils ein Gleitlager 7 eingesetzt ist.

Die Gleitlager 7 dienen einer Lagerung einer Gewindespindel 8 in dem Gehäuse 2. Diese weist einen Spindelkern 12 und ein darauf ausgebildetes Gewinde 13 auf. Beiderseits des Gewindes 13 erstrecken sich Abschnitte 12a, 12b des Spindelkerns 12 mit zylinderförmiger Außenkontur. Die Gewindespindel 8 ist mittels der Gewindekernabschnitte 12a, 12b in den Gleitlagern 7 um ihre Längsachse 9 drehbar und in deren Richtung axial verschiebbar gelagert. Sie ist mittels Dichtungen 60, die später ausführlicher beschrieben werden, gegenüber dem jeweiligen Deckel 4, 5 abgedichtet. Die Gewindespindel 8 ist mittels eines in den Figuren nicht dargestellten Antriebs um ihre Längsachse 9 rotatorisch antreibbar. Sie ist endseitig mit einer zu betätigenden Einheit, z.B. einer Kupplung 16 oder einer Bremse verbunden, die in Figur 1 nur angedeutet ist. Zwischen der Gewindespindel 8 und der zu betätigenden Einheit 16 ist eine Feder 17 eingezeichnet, die die zwischen der Gewindespindel 8 und der Einheit 16 wirkenden Kräfte darstellen soll.

Das Gehäuse 2 bildet eine abgedichtete Kammer aus, in der eine magnetorheologische Flüssigkeit 11 aufgenommen ist, welche als MRF 11 bezeichnet wird und die die in dem Gehäuse 2 gelagerte Gewindespindel 8 umgibt. Das Gehäuse 2 ist von Magneten 10, z.B. in Form von Spulen, umgeben, mit denen ein schaltbares Magnetfeld erzeugt werden kann, das auf die im Gehäuse aufgenommene MRF 11 wirkt. Anders ausgedrückt ist die in dem Gehäuse befindliche und die Gewindespindel 8 umgebende MRF 11 in einem Zustand keinem Magnetfeld ausgesetzt, in welchem Fall die MRF 11 flüssig ist, oder sie ist in einem zweiten Zustand einem Magnetfeld ausgesetzt, wodurch sie sich aufgrund ihrer im nachfolgenden näher dargelegten magnetorheologischen Eigenschaften verfestigt.

Figur 2 zeigt den Aktor 1 unter einem angelegten Magnetfeld der Flussdichte B bei stillstehender Gewindespindel 8, wobei die Feldlinien 22 des Feldes in der Figur angedeutet sind. Einige Millisekunden nach Anlegen des magnetischen Felds geht die MRF 11 in den verfestigten Zustand über, in dem sie zweiphasig ist. Die polarisierbaren Partikel 15 bilden unter Einfluss des magnetischen Felds Ketten 67 entlang dessen Flusslinien 22 aus. In der Folge "sedimentiert" die MRF 11. Die Ketten, die in Figur 2 zeichnerisch angedeutet sind, bilden eine feste Struktur, die nach dem zuvor erläuterten Modell von Bingham als Festkörper betrachtet werden kann.

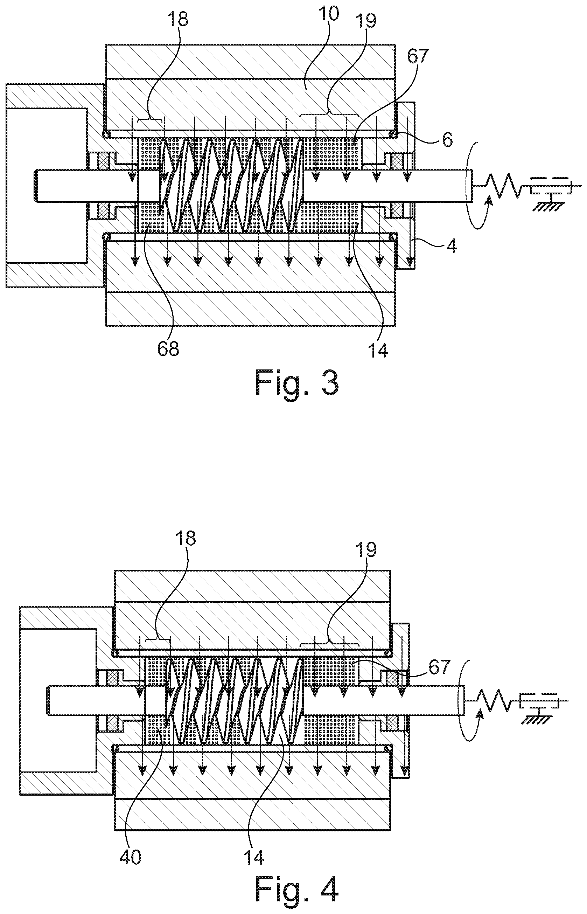

Für eine Betätigungsaktion des Aktors 1 ist es notwendig, dass die Gewindespindel 8 rotiert. Dieser Umstand ist in den Figuren 3 und 4 gezeigt. Es liegt ein Magnetfeld an und die MRF 11 ist verfestigt. Die auf die MRF 11 in dem Spalt zwischen den Gewindespitzen des Gewindes 13 und der Innenwand des Rohrs 3 durch die Gewindespindel 8 ausgeübte Schubspannung liegt dabei noch unter der Grenzscherspannung. Anders ausgedrückt bedeutet das, dass die über die Gewindespindel 8 in die MRF 11 eingeleitete Kraft $F_{axial}$ der Feder 17 nicht ausreicht, um die aufgrund des magnetischen Felds ausgebildeten Ketten aus polarisierten Partikeln 15 im Spalt zwischen Gewinde 13 und Rohr 3 zu zerstören oder zu zerbrechen. Die Gewindespindel 8 schraubt sich daher in der MRF 11 wie in einem festen Körper nach vorn, also in der Figur 3 nach rechts, gegen die Kraft der Feder 17. Die dabei erreichbare maximale Axialkraft ist abhängig von der Grenzscherspannung und der Scherfläche.

Figur 4 zeigt einen Zustand, bei dem die auf die MRF 11 ausgeübte Schubspannung die Grenzscherspannung überschritten hat. Bei Überschreiten dieses Werts brechen die aus den polarisierten Partikeln gebildeten Ketten, bilden sich allerdings aufgrund des fortwährend wirkenden magnetischen Felds in Bereichen mit geringerer Schubspannung sofort erneut. Im Ergebnis bedeutet dies, dass die maximal erzeugbare Axialkraft erreicht ist. Das Gewinde 13 der Gewindespindel 8 bekommt in der Kettenstruktur der MRF 11 Schlupf, sodass Teile der MRF 11 trotz deren verfestigten Zustands durch das als archimedische Schraube wirkende Gewinde 13 nach hinten (also in der Figur nach rechts) in einen Abschnitt 18 hinter das Gewinde 13 gefördert wird. Dieser Zustand entspricht dem im Zusammenhang mit Figur 1 erläuterten Zustand (ohne magnetisches Feld), allerdings mit einer hochviskosen Flüssigkeit.

In dem Abschnitt 18 hinter dem Gewinde 13, in den Teile der MRF 11 bei Überschreiten der Grenzscherspannung gefördert werden, wirkt auf die MRF 11 keine Schubspannung mehr, sodass sich deren Partikel 15 wieder zu Ketten formieren. Infolge der auf die Gewindespindel 8 wirkenden Axialkraft durch die Feder 17 steht dieser Abschnitt 18 allerdings unter höherem Druck als der Abschnitt 19 vor dem Gewinde 13. Der zwischen dem Gewinde 13 und der Innenwand der Kammer 2 ausgebildete Spalt ist nun derart dimensioniert, dass die Trägerflüssigkeit der MRF 11 durch diesen hindurch passieren kann und von dem hinter dem Gewinde 13 befindlichen Abschnitt 18 durch den Spalt in den vor dem Gewinde befindlichen Abschnitt 19 strömt. Da sich die in dem Abschnitt 18 hinter dem Gewinde 13 befindlichen Partikel 15 wieder zu Ketten formiert haben, kommt es dort zu einer Ansammlung von verfestigten Partikeln 15. Die miteinander verketteten Partikel 15 bilden hinter dem Gewinde 13 ein Polster aus, auf dem sich der letzte Gewindegang des Gewindes 13 abstützt. Die Partikel 15 im Abschnitt 18 verhalten sich wie ein Festkörper, und je mehr Partikel 15 sich hinter dem Gewinde 13 ansammeln, desto größer wird das dort entstehende Polster und der Versatz der Gewindespindel 8 in axialer Richtung.

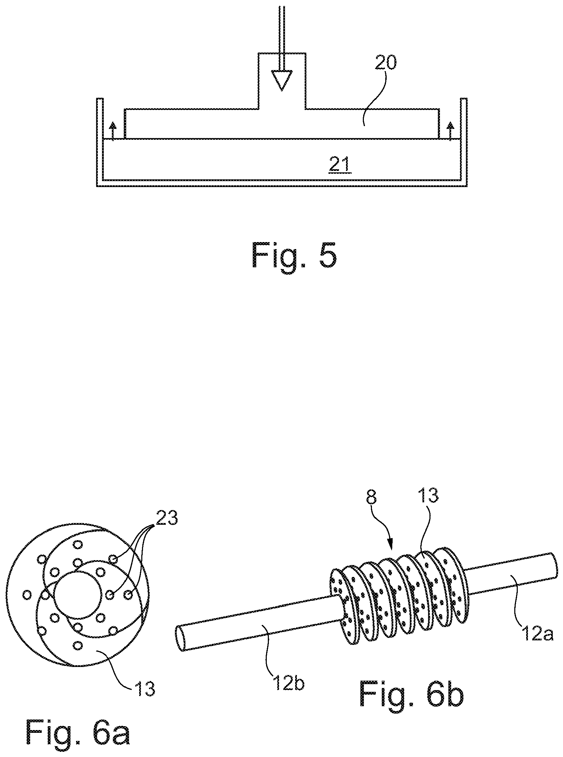

Die vorstehend beschriebene Sperrung der Partikel 15 im Abschnitt 18 erfolgt nicht dadurch, dass die Breite des Spalts zwischen Gewinde 13 und Gehäuse 2 kleiner ist, als die Partikelgröße, sondern dadurch, dass sich die Partikel 15 nicht wie eine Flüssigkeit, sondern wie ein Festkörper verhalten. Dieser Umstand ist in der Prinzipskizze der Figur 5 verdeutlicht. Dort ist ein Stempel 20 gezeigt, der mit einer Kraft F auf in einem Sandkasten befindlichen Sand 21 drückt. Da die auf den Sand 21 ausgeübte Kraft innerhalb des aus Partikeln bestehenden Sands 21 nicht in Form eines hydraulischen Drucks übertragen wird (Silos Theorie), ist die auf seitliche, also seitlich des Stempels 20, befindliche Sandkörner wirkende Axialkraft gering. In diesem Beispiel werden die dort befindlichen Sandkörner durch die Gravitation und Kohäsionskräfte zwischen den Körnern gehalten. Im Falle der Partikel der MRF 11 sind dies die magnetische Kraft und Kohäsionskräfte.

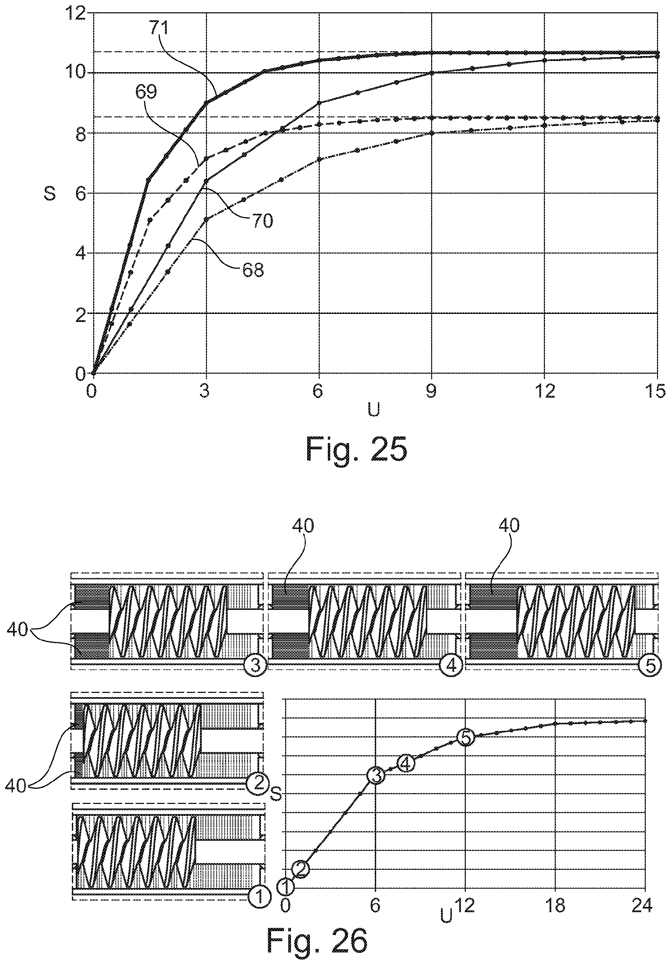

Die in Figur 4 angedeutet Axialverschiebung der Gewindespindel 8 schreitet fort, solange sich im Abschnitt 18 hinter dem Gewinde 13 weitere Partikel 15 der MRF 11 sammeln. Eine maximale Axialverschiebung wird theoretisch erreicht, wenn sich alle Partikel 15 im Abschnitt 18 befinden. Der Vorgang des Aufbaues des Partikelpolsters hinter dem Gewinde 13 und die dadurch bewirkte Axialverschiebung der Gewindespindel 8 ist in Figur 26 in übersichtlicher Weise gezeigt. In dem Diagramm der Figur 26 ist eine Weg-Umdrehungs-Kurve der Gewindespindel 8 (Weg im Sinne der Verschiebung der Spindel in axialer Richtung) gezeigt, während auf dieser Kurve markierte Positionen in den um das Diagramm angeordneten Zeichnungen dargestellt sind. Die Kurve besitzt die Form einer aus linearen Abschnitten bestehenden Asymptote.

Dem Beispiel der Figur 26 wurde eine MRF 11 mit einem Anteil von 32 Volumenprozenten Eisenpartikel zugrunde gelegt. Während der gesamten Zeitdauer der Aufzeichnung war das magnetische Feld eingeschaltet und die im Spalt zwischen dem Gewinde 13 und dem Gehäuse 2 wirkende Schubspannung größer als die Grenzscherspannung. Die verwendete Gewindespindel 8 hatte ein eingängiges Gewinde 13 mit sechs Windungen. Die MRF 11 wurde demnach als durch das Gewinde in acht Volumina geteilt betrachtet, nämlich die Volumina der sechs Windungen, das Volumen im Abschnitt 19 vor dem Gewinde 13, auch als "Eisenreservoir" bezeichnet, und das Volumen des Abschnitts 18 hinter dem Gewinde, auch als "Eisenpolster" bezeichnet.

Im Anfangszustand (gekennzeichnet im Diagramm mit (1)) liegt in allen Volumina ein ursprünglicher Partikelvolumenanteil in Höhe von 32 Volumenprozenten vor. Nach Ablauf einer ersten Umdrehung (gekennzeichnet im Diagramm mit (2)) bildet die Partikelmenge der letzten Windung (links) das Polster. Als Reaktion verschiebt sich die Spindel 8 um einen bestimmten Weg (u1). Auf die andere Gewindeseite, also im Abschnitt 19, greift die erste Windung des Gewindes 13 während dieser Umdrehung eine Scheibe von der Stärke der zurückgelegten Axialverschiebung der Spindel 8 des Reservoirs des Abschnitts 19 ab. Das Volumen dieser abgegriffenen Scheibe ist kleiner als das Volumen einer Windung des Gewindes 13. Die in dem abgegriffenen Volumen enthaltene Partikelmenge wird zusammen mit dem abgegriffenen Trägerflüssigkeitsvolumen mit der aus dem Polster (dem Abschnitt 18) verdrängten Trägerflüssigkeit gemischt. Bei dem zugrunde gelegten ursprünglichen Partikelvolumenanteil von 32% beträgt der Partikelvolumenanteil in der ersten Windung des Gewindes 13 nur noch ca. 10%. In dem übrigen Abschnitt 19 bleibt der Partikelvolumenanteil infolge der verfestigten Partikelstruktur unverändert bei 32%.

Nach dem gleichen Prinzip fördern die folgenden fünf Umdrehungen der Spindel 8 immer die gleiche Eisenmenge in den Abschnitt 18. Dabei verschiebt sich die Spindel 8 mit jeder Umdrehung um einen gleichen axialen Betrag (u1=u2=u3=u4=u5=u6). Es ergibt sich das im Diagramm dargestellte lineare Weg-Umdrehungs-Verhältnis bis zum Punkt (3). Die bei jeder Umdrehung der Spindel 8 vom Gewinde 13 jeweils abgegriffenen Scheiben des Reservoirs sind gleich und ergeben im Resultat in jeder Windung des Gewindes 13 gleiche Partikelvolumenanteile.

Am Punkt (3) erreicht die erste Windung mit verringertem Partikelvolumenanteil (10%) den Abschnitt 18. Im Ablauf einer weiteren Umdrehung wird diese Partikelmenge in den Abschnitt 18 gefördert. Als Reaktion verschiebt sich die Spindel 8 um eine bestimmte Axialverschiebung (u7), die entsprechend der geringeren Partikelmenge kleiner ist, als die Axialverschiebung (u1). Auf die andere Gewindeseite im Abschnitt 19 greift die erste Windung des Gewindes 13 während dieser Umdrehung eine Scheibe von der Stärke der zurückgelegten Axialverschiebung der Spindel 8 (u7) des Reservoirs des Abschnitts 19 ab. Die in dem abgegriffenen Volumen enthaltene Partikelmenge wird zusammen mit dem abgegriffenen Trägerflüssigkeitsvolumen mit der aus dem Polster (dem Abschnitt 18) verdrängten Trägerflüssigkeit gemischt. Bei dem zugrunde gelegten ursprünglichen Partikelvolumenanteil von 32% beträgt der Partikelvolumenanteil in der ersten Windung des Gewindes 13 bei dieser Umdrehung dann nur noch etwa 3%. Entsprechend des geringeren je Umdrehung geförderten Partikelvolumens weist die Kurve in dem Abschnitt von der siebten bis zur zwölften Windung (zwischen den Punkten (4) und (5) im Diagramm) eine geringere lineare Steigung auf. Punkt (5) verdeutlicht den Zustand nach 12 Umdrehungen mit u7=u8=u9=u10=u11=u12. Die vorstehend beschriebene Verringerung des je Windung geförderten Partikelvolumens wiederholt sich nach jeweils sechs weiteren Umdrehungen, sodass die Steigung der Axialverschiebungs-Umdrehungs-Kurve alle sechs Umdrehungen abnimmt, wie im Diagramm zu erkennen ist. Rein mathematisch betrachtet verschiebt sich die Spindel 8 unendlich weiter (bis ein Anschlag erreicht ist), allerdings mit immer geringeren Axialverschiebungen, die jedoch nie null werden. Letztlich nähert sich die Axialverschiebungs-Umdrehungs-Kurve einer Horizontalen an.

Durch die beschriebene Bildung eines Polsters aus Partikeln im Abschnitt 18 hinter dem Gewinde 13 wird die im Vergleich zu einer Verschiebung bei einer Schubspannung kleiner als die Grenzscherspannung erzielbare Axialkraft signifikant gesteigert, theoretisch bis ins Unendliche. Es ergibt sich daher eine deutlich geringere Abhängigkeit von der Grenzscherspannung einer MRF 11, die bislang stets der limitierende Faktor bei einer Verwendung von MRF 11 war.

Sobald das Magnetfeld ab- oder eingestellt wird, verliert das im Abschnitt 18 gebildete Partikelpolster seine festkörperähnlichen Eigenschaften. Die MRF 11 verhält sich wieder wie eine Newtonsche Flüssigkeit. Der durch die Feder 17 auf die Spindel 8 wirkenden Axialkraft wird bis auf geringe Strömungskräfte kein Widerstand mehr entgegengesetzt und die dann nicht mehr miteinander verketteten polarisierbaren Partikel 15 strömen durch den Spalt zwischen Gewinde 13 und Gehäuse 2. Es kommt zu einer Homogenisierung der MRF 11 und die Gewindespindel 8 bewegt sich durch die Federkraft $F_{axial}$ zurück in ihre ursprüngliche Position anliegend an den linken Deckel 5 (siehe Figur 1).

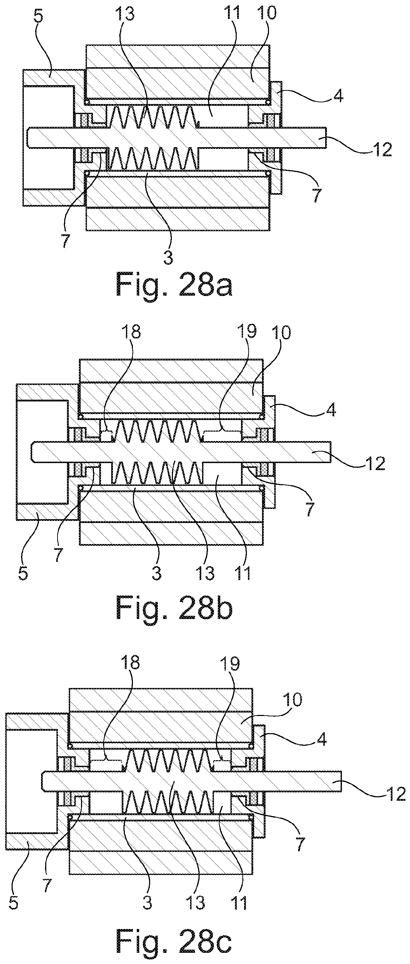

In den Figuren 28a, 28b und 28c ist die Verschiebung der Spindel in axialer Richtung infolge eines mittels des Magneten 10 erzeugten Magnetfelds der Feldstärke B in verschiedenen Stadien dargestellt. Fig. 28a zeigt die Spindel in ihrer ursprünglichen Lage an den linken Deckel 5 angrenzend. Beim Einschalten des Magnetfelds verschiebt sich die Spindel 13 zunächst bis zum Erreichen der Grenzschubspannung bis in die in Figur 28b gezeigte Lage. Durch Ausnutzten des zuvor beschriebenen Effekts der Bildung eines Partikelpolsters 40 kann die Spindel 13 aus der in Figur 28b gezeigten Stellung weiter in axialer Richtung verschoben werden, nämlich in die in Figur 28c gezeigte Endstellung.

Figur 6 zeigt eine Ausführungsform einer Gewindespindel 8, deren Gewinde 13 mit parallel zur Längsachse 9 verlaufenden durchgehenden Bohrungen 23 versehen ist. Die Bohrungen 23 stellen eine Verbindung zwischen benachbarten Gewindegängen her und können zusätzlich oder alternativ zum Spalt zwischen Gewinde 13 und Gehäuse 2 ausgebildet sein. Die Bohrungen 23 begünstigen bei der zuvor beschriebenen Polsterbildung ein Strömen von Trägerflüssigkeit aus dem Abschnitt 18 hinter dem Gewinde 13 in den Abschnitt 19 vor dem Gewinde 13.

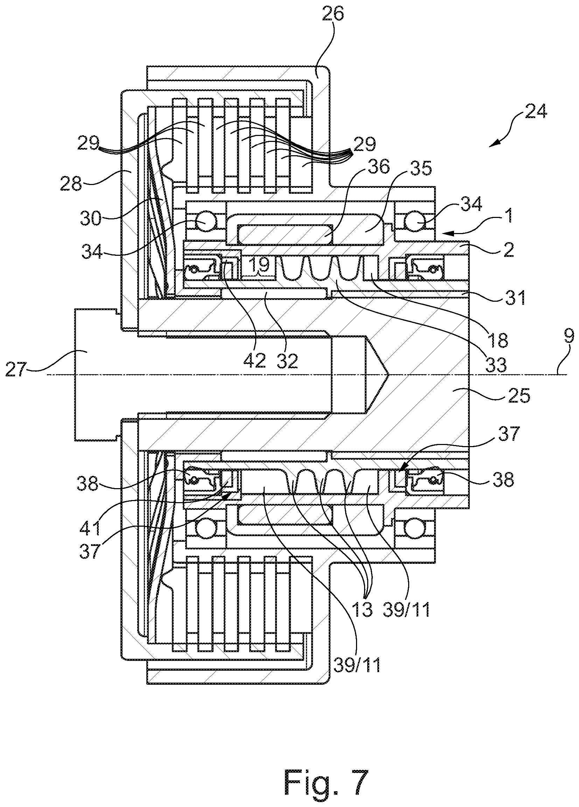

Figur 7 zeigt eine besondere Ausführungsform einer Kupplung 24 nach der Erfindung mit einem magnetorheologischem Aktor 1 nach der Erfindung in einer Schnittansicht. Die Kupplung 24 ist im gekuppelten Zustand dargestellt. Figur 7 zeigt eine Motorwelle 25 als Antriebselement und eine Riemenscheibe 26 als Abtriebselement. Die Motorwelle 25 ist mittels einer Zentralschraube 27 mit einem Kupplungsflansch 28 verbunden. Der Kupplungsflansch 28 kann über Lamellen 29 mit der Riemenscheibe 26 in Reibgriff gebracht, also gekuppelt werden, sodass ein Drehmoment von der Motorwelle 25 über den Kupplungsflansch 28 und die Lamellen 29 auf die Riemenscheibe 26 übertragen werden kann. Eine Tellerfeder 30 ist einerseits am Kupplungsflansch 28 und andererseits am Lamellenpaket 29 abgestützt und spannt die Kupplung 24 in den gekuppelten Zustand vor (selbstschließende Kupplung). Die Tellerfeder 30 rotiert zusammen mit der Motorwelle 25.

Auf der Motorwelle 25 ist eine Gewindehülse 33 drehfest und in Längsrichtung 9 axial verschiebbar angeordnet. Die Gewindehülse 33 rotiert folglich mit der Motorwelle 25 und umgibt diese. Zwischen der Gewindehülse 33 und der Motorwelle 25 ist dazu eine in Längsrichtung 9 verlaufende Axialführung 31, z.B. in Form einer Axialverzahnung oder eines oder mehrerer Gleitsteine, sowie ein Gleitlager 32 angeordnet. Die Gewindehülse 33 ist auf ihrer von der Motorwelle 25 abgewandten Außenseite mit einem Gewinde 13 versehen. Sie ist des Weiteren endseitig, in Figur 7 auf der linken Seite, an der Tellerfeder 30 abgestützt.

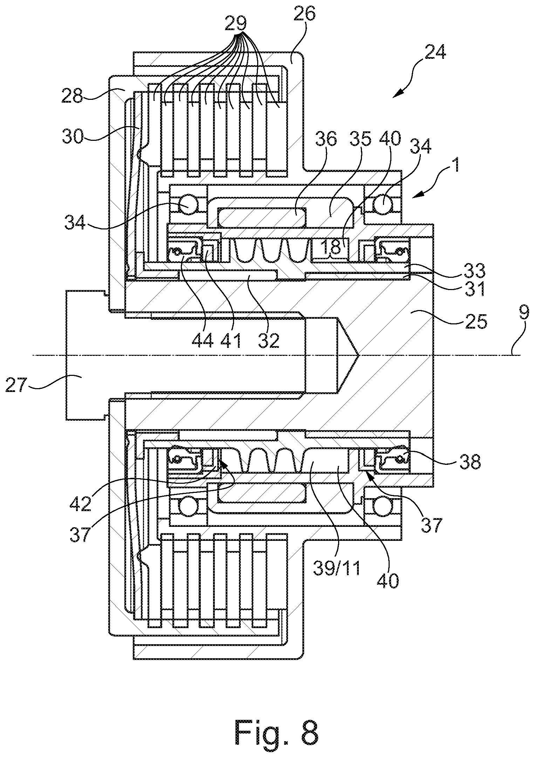

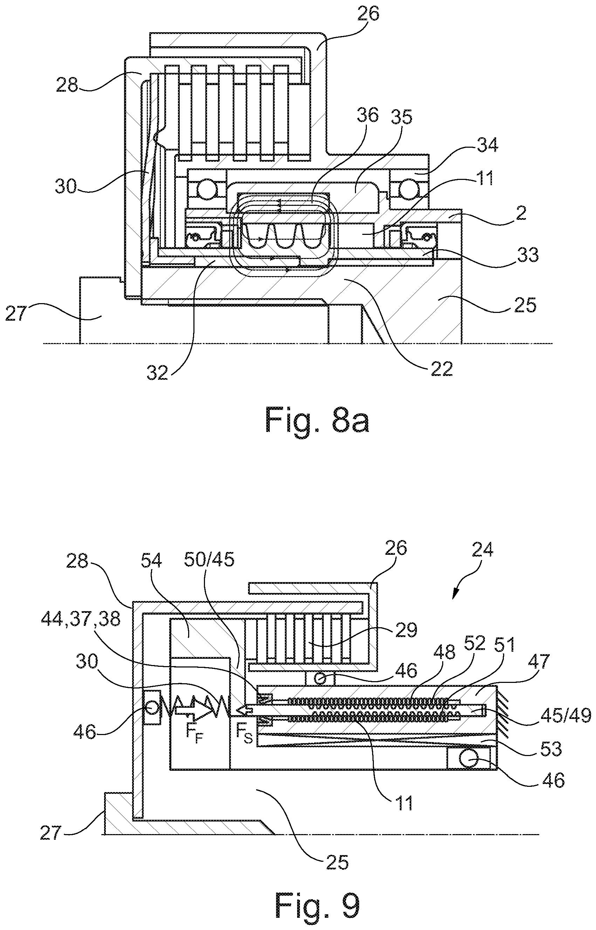

In der Riemenscheibe 26 ist ein Gehäuse 2 des Aktors 1 mittels Lagern 34 gelagert. Das Gehäuse 2, die Riemenscheibe 26 und die Motorwelle 25 sind in axialer Richtung, also in Längsrichtung 9 relativ zueinander positioniert, also nicht verschiebbar. Das Gehäuse 2 ist des Weiteren rotatorisch festgelegt, rotiert nicht zusammen mit der Motorwelle 25 oder der Riemenscheibe 26 und ist von einer in einer Eisenführung 35 aufgenommenen Spule 36 umgeben. Die Spule 36 dient der Erzeugung eines schaltbaren Magnetfelds, das mittels der Eisenführung 35 in der in Figur 8a gezeigten Weise umgelenkt wird. Die Gewindehülse 33 und das feststehende Gehäuse 2 sollen nicht magnetisch sein, damit zwischen der Eisenführung 36 und der Motorwelle 25 ein magnetischer Kreis entstehen kann. Um den bereits zuvor erläuterten Partikelpolstereffekt bestmöglich ausnutzen zu können, sollte in dem Polsterbereich, also im Abschnitt 18 hinter dem Gewinde 13 ein Magnetfeld mit in radialer Richtung verlaufenden Feldlinien erzeugt werden. Das Gehäuse 2 ist mittels zweier Permanentmagnetdichtungen 37, die jeweils mit einem Radialwellendichtring 38 ergänzt sind, gegenüber der Motorwelle 25 abgedichtet. Zwischen dieser und dem Gehäuse 2 ist eine Kammer 39 ausgebildet, die mit einer MRF 11 gefüllt ist. Das Gewinde 13 der Gewindehülse 33 sowie beiderseits des Gewindes 13 angrenzende Hülsenabschnitte der Gewindehülse sind dabei in der Kammer 39 aufgenommen, sodass die Gewindehülse 33 in der Kammer 39 eine Axialverschiebung durchführen kann.

Die in der Kammer 39 befindliche MRF 11 ist in dem in Figur 7 gezeigten gekuppelten Zustand nicht mit einem Magnetfeld beaufschlagt und folglich flüssig. Das Gewinde 13 der Gewindehülse 33 rotiert in der flüssigen MRF 11. Es kommt zu einer Strömung der MRF 11 durch die Gewindegänge des Gewindes 13 und den Spalt zwischen diesem und dem Gehäuse 2, die schon mit Bezug auf Figur 1 erläutert wurde. Aufgrund von Strömungskräften entsteht eine nur geringe Axialkraft, die von der Gewindehülse 33 auf die Tellerfeder 30 übertragen wird, jedoch deren Vorspannkraft bei weitem nicht erreicht. Die Gewindehülse 33 wird durch die Vorspannkraft der Tellerfeder 30 vom Kupplungsflansch 28 fort, also in der Figur 7 nach rechts, gedrängt. Die Tellerfeder 30 übt daher eine in diese Richtung weisende Anpresskraft auf die Lamellen 29 aus, die gegeneinander gepresst werden und infolge Reibung das Drehmoment auf die Riemenscheibe 26 übertragen. Es wird auf die im Zusammenhang mit der Figur 1 gemachten Ausführungen verwiesen, die für die Ausführungsform der Kupplung 24 und des Aktors 1 der Figuren 7 und 8 entsprechend gelten.

Figur 8 zeigt die Kupplung 24 der Figur 7 im entkuppelten Zustand. Dabei ist die MRF 11 mit einem mittels der Spule 36 erzeugten magnetischen Feld beaufschlagt, wodurch diese im verfestigten Zustand vorliegt. Es wird auf die Ausführungen zu den Figuren 1 bis 6 sowie 26 verwiesen, die hier entsprechend gelten. Infolge der Verfestigung der MRF 11 schraubt sich das Gewinde 13 der Gewindehülse 33 aus der verfestigten MRF 11 aus. Die Steigung des Gewindes 13 ist dabei derart ausgerichtet, dass die Gewindehülse 33 dadurch in axialer Richtung zum Kupplungsflansch 28, also in Figur 8 nach links, verschoben wird. Infolge dieser Axialverschiebung übt die Gewindehülse 33 eine größere Axialkraft $F_{spindel}$ auf die Tellerfeder 30 als deren Vorspannung aus, sodass die Gewindehülse 33 gegen die Vorspannung der Tellerfeder 30 in Richtung des Kupplungsflansches 28 verschoben wird. Infolge dieser Axialverschiebung kommt es zu einer Verformung der Tellerfeder 30, wodurch der von dieser auf die Lamellen 29 ausgeübte Druck verringert und abgebaut wird. Der Reibschluss zwischen den Lamellen 29 wird bis zur Trennung der Lamellen 29 voneinander abgebaut. Bei vollständiger Trennung der Lamellen 29 ist die Kupplung 24 sauber entkuppelt. Zu diesem Zeitpunkt kann der Antrieb der Motorwelle 25 eingestellt werden und die Riemenscheibe 26 unabhängig von dieser weiterlaufen. Ein beispielhafter Anwendungsfall ist der Antrieb einer Kfz-Klimaanlage bei einem mit einem Start-Stopp-System versehenen Kraftfahrzeug.

Sollte der Antrieb der Motorwelle 25 bei offener Kupplung nicht abgeschaltet sein, wie dies bei konventionellen Kupplungen, z.B. bei Kfz-Kupplungen der Fall ist, riebe die Gewindehülse 33 an dem sich im Abschnitt 18 ausgebildeten Partikelpolster 40. Aufgrund guter Schmiereigenschaften der MRF 11 und der nicht magnetischen Verbindung zwischen dem Polster 40 und dem Gewinde 13 kann ein Reibwert zwischen ca. 0,04 und 0,07 angenommen werden.

Durch den Aufbau eines im Zusammenhang mit Figur 26 beschriebenen Polsters 40 aus Partikeln im Abschnitt hinter dem Gewinde (das Polster ist in Figur 8 gekennzeichnet), wird der besondere Vorteil erzielt, dass die Endwinkelstellung der Gewindehülse keinen Einfluss auf deren Axialverschiebung hat. Wenn alle - oder zumindest der größte Teil der - Partikel der MRF 11 in dem Polster 40 enthalten sind, verbleibt die Gewindehülse unabhängig davon, ob die Motorwelle 25 rotiert oder stillsteht, in dieser Endstellung, solange das magnetische Feld aufrechterhalten wird. Diese Endstellung ist stabil und kann beliebig lange gehalten werden. Ein Einkuppeln der Kupplung 24 erfolgt durch ein Abschalten des magnetischen Felds. Infolgedessen verflüssigt sich die MRF 11, es kommt zu einem Abbau des Partikelpolsters 40 und die Gewindehülse 33 wird durch die Kraft der Feder 30 zurück in die in Figur 7 gezeigte Ausgangsposition gedrängt. Der Einkuppelvorgang kann in diesem Fall sehr schnell ablaufen. Es sei darauf hingewiesen, dass er durch eine Steuerung des Abbaus des Magnetfeldes, z.B. durch einen progressiven Abbau des Magnetfelds, zeitlich verzögert und in nahezu beliebiger Weise erfolgen kann. Durch eine Rotation der Motorwelle - und damit der mit dieser drehfest verbundenen Gewindehülse 33 - kann das Erreichen des homogenen Zustands der flüssigen MRF 11 beschleunigt werden.

Figur 8a zeigt den Verlauf des mittels der Spule 36 erzeugten Magnetfelds mit Feldlinien 22. Die Feldlinien 22 verlaufen durch die Spule 36 und die Eisenführung 35 in axialer Richtung, dann in radialer Richtung über die Kammer 39, in der die MRF aufgenommen ist, dann in entgegengesetzter axialer Richtung durch die Motorwelle 25 und wieder in radialer Richtung von dieser durch die Kammer 39 mit der MRF 11 zurück. Es sei darauf hingewiesen, dass die Motorwelle 25 und das Gehäuse 2 aus nicht magnetischen Materialien bestehen, um diesen Feldlinienverlauf zu ermöglichen.

In den Figuren 9 bis 16 ist eine andere Ausführungsform einer erfindungsgemäßen Kupplung 24 mit magnetorheologischem Aktor 1 gezeigt. Die Kupplung 24 ist in Figur 9 im gekuppelten Zustand dargestellt. Figur 9 zeigt eine Motorwelle 25 als Antriebselement und eine Riemenscheibe 26 als Abtriebselement. Die Motorwelle 25 ist mittels einer Zentralschraube 27 mit einem Kupplungsflansch 28 verbunden. Der Kupplungsflansch 28 kann über Lamellen 29 mit der Riemenscheibe 26 in Reibeingriff gebracht, also gekuppelt werden, sodass ein Drehmoment von der Motorwelle 25 über den Kupplungsflansch 28 und die Lamellen 29 auf die Riemenscheibe 26 übertragen werden kann. Eine Feder, z.B. in Form einer in der Figur nur angedeuteten Tellerfeder 30 ist einerseits am Kupplungsflansch 28 und andererseits an einer Gewindehülse 45 und über diese am Lamellenpaket 29 abgestützt und spannt die Kupplung 24 in den gekuppelten Zustand vor (selbstschließende Kupplung). Die Tellerfeder 30 rotiert zusammen mit der Motorwelle 25, ist gegenüber dieser jedoch mit einem Lager 46 gelagert.

Die Riemenscheibe 26 ist mit einem Lager 46 an einem Gehäuse 47 gelagert. Die Motorwelle 25 ist ebenfalls mittels eines Lagers 46 an dem Gehäuse 47 gelagert. Das Gehäuse 47 ist fest angeordnet, d.h. es ist gegenüber der Motorwelle 25 sowie gegenüber der Riemenscheibe 26 weder axial verschiebbar noch drehbar. Es besitzt die Form eines Hohlzylinders und umgibt die Motorwelle 25 vollumfänglich. In dem Gehäuse 47 ist eine im Wesentlichen zylinderförmige Kammer 48 ausgebildet, die in axialer Richtung zu einer Seite des Gehäuses hin (in Figur 9 zur linken Seite) offen ist. Auf der gegenüberliegenden Seite ist die Kammer 48 durch das Gehäuse 47 geschlossen. In der Kammer 48 ist die Gewindehülse 45 drehbar und in axialer Richtung verschiebbar angeordnet. Mittels eines dritten Lagers 54 ist die Feder 30 gegenüber dem Kupplungsflansch 28 abgestützt.

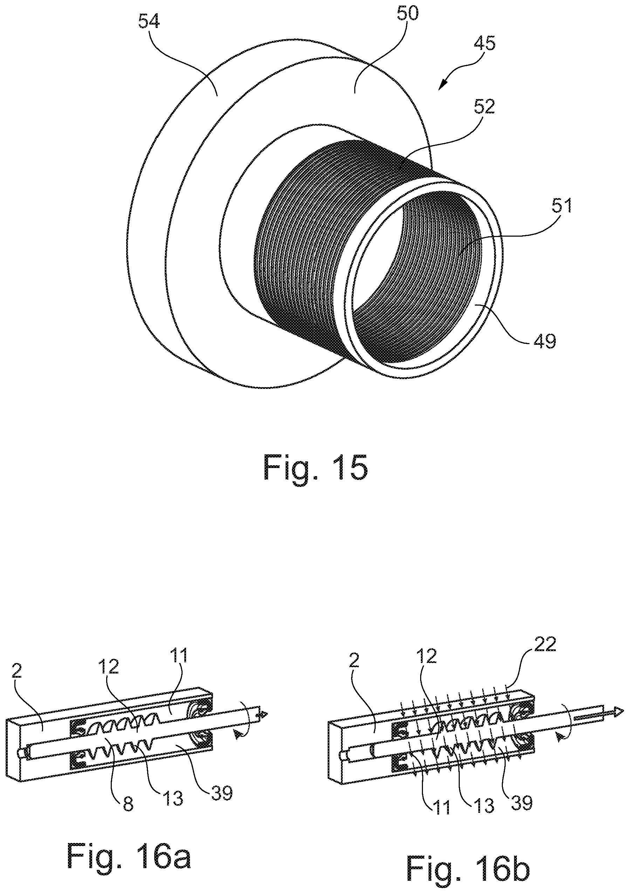

Die Gewindehülse 45 ist in Figur 15 perspektivisch dargestellt. Sie weist einen sich in axialer Richtung erstreckenden Hülsenabschnitt 49 und einen sich im Wesentlichen in radialer Richtung erstreckenden Kragen 50 auf. Der Hülsenabschnitt 49 ist mit einem Innengewinde 51 und einem Außengewinde 52 versehen. Das radial äußere Ende der Gewindehülse 45 ist mit einer großen Masse 54 versehen, die der Gewindehülse 45 ein hohes Trägheitsmoment verschaffen soll. Die Kammer 48 ist zwischen der Gewindehülse 45, insbesondere zwischen dem Hülsenabschnitt 49 und dem Gehäuse 47 abgedichtet. Dazu können die in der vorliegenden Anmeldung genannten Dichtungskonzepte mittels Permanentmagnetdichtung 37, 41 ggf. in Kombination mit einer Radialwellendichtung 38 genutzt werden. In der derart abgedichteten Kammer 48 ist eine MRF 11 aufgenommen. Zwischen dem Gehäuse 47 und dem Lager 46 ist eine Spule 53 zur Erzeugung eines schaltbaren Magnetfelds angeordnet.

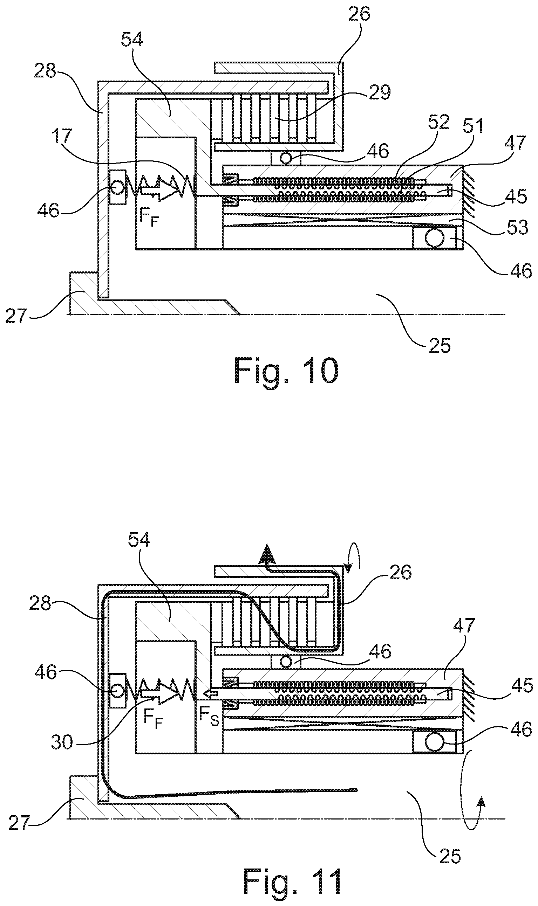

Figur 10 zeigt die Kupplung 24 bei nicht rotierender Motorwelle 25. Die Kupplung 24 ist geschlossen, da die Feder 30 eine in axialer Richtung wirkende Kraft $F_F$ auf den Kragen 50 der Gewindehülse 45 ausübt. Die von dem Kragen 50, also durch die Gewindehülse 45, auf die Feder 30 ausgeübte Gegenkraft ist mit Fs gekennzeichnet. Die MRF 11 ist ohne angelegtes magnetisches Feld flüssig.

Figur 11 zeigt die Kupplung 24 im Betrieb im gekuppelten Zustand bei rotierender Motorwelle 25 und ausgeschaltetem Magnetfeld. Der Kupplungsflansch 28 rotiert zusammen mit der Motorwelle 25, den Lamellen 29, der Riemenscheibe 26, der Gewindehülse 45 und der Feder 30. Die MRF 11 ist flüssig und die Gewindehülse 45 schraubt ständig in der flüssigen MRF 11. Infolgedessen wird eine geringe axial Kraft erzeugt, die von der Gewindehülse 45 auf die Feder 30 entgegen deren Vorspannung wirkt und der Kupplungsanpresskraft entgegen gerichtet ist. Diese Kraft ist jedoch kleiner als die Vorspannkraft der Feder 30, sodass die Kupplung gekuppelt bleibt und das volle Drehmoment überträgt. Infolge der Masse 54 weist die rotierende Gewindehülse 45 eine hohe kinetische Energie auf.

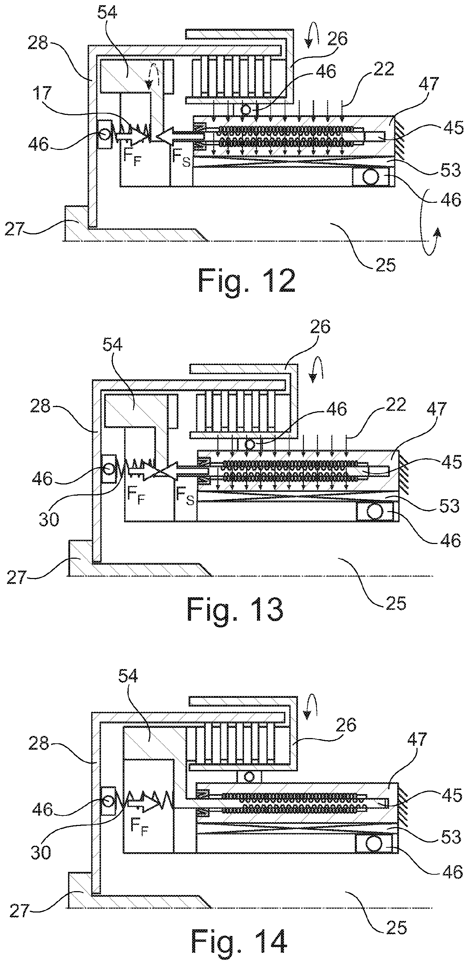

Figur 12 zeigt die Kupplung 24 zu Beginn des Entkuppelns. Die Motorwelle 25 treibt den Kupplungsflansch 28 an und das Magnetfeld wird eingeschaltet, sodass sich die MRF 11 innerhalb von einigen wenigen Millisekunden verfestigt. Die Gewinde 51, 52 der Gewindespindel 45 schrauben sich aus der verfestigten MRF 11 heraus, sodass die Gewindespindel 45 aus der Kammer 48 heraus axialverschoben wird. Die dabei erzeugte axiale Kraft ist größer als die Federvorspannung der Feder 30, sodass die Kupplung 24 beginnt sich zu öffnen. Die Gewindehülse gelangt unmittelbar nach dem Ansprechen des Aktors 1 außer Eingriff mit den Lamellen, sodass von der Motorwelle 25 kein Drehmoment mehr auf sie übertragen wird. Um aber die Kupplung voll öffnen und entkoppeln zu können und die Lamellen 29 sauber voneinander zu trennen, ist es erforderlich, dass die Gewindehülse 45 solange weiter rotiert, bis sie vollständig gegen die Spannung der Feder 30 aus der Kammer 48 herausgeschraubt ist. Diese Rotationsenergie erhält die Gewindehülse 45 über die Masse 54 per Trägheit. Die Steigung der Gewinde 51, 52 bestimmt die axiale Geschwindigkeit der Hülse 45 beim Ausschrauben aus der Kammer. Unmittelbar nach Beginn des Entkuppelns, d. h. sobald die Hülse 45 die Lamellen 29 nicht mehr berührt, kann daher der Antrieb der Motorwelle 25 ausgeschaltet werden.

Figur 13 zeigt die Kupplung 24 im vollständig entkuppelten Zustand. Die geöffnete Kupplung 24 lässt die Motorwelle 25 frei drehen. Solange wie erforderlich bleibt die MRF 11 unter dem Einfluss des Magnetfelds und im verfestigten Zustand, so dass die durch die Feder 30 gegen den Kupplungsflansch 28 ausgeübte Anpresskraft der Feder 30 ausgeglichen bleibt. Zum Einkuppeln der Kupplung 24 wird das Magnetfeld einfach ausgeschaltet. Dieser Vorgang ist in Figur 14 dargestellt. Nach Ausschalten des Magnetfelds verflüssigt sich die MRF 11 innerhalb von Millisekunden und die von der MRF 11 auf die Gewindehülse 45 ausgeübte Axialkraft entfällt. Aufgrund der durch die Feder 30 auf die Gewindehülse 45 ausgeübten Vorspannkraft fährt die Gewindehülse 45 in das Gehäuse 47 ein. Das Prinzip der Kupplung der Figuren 9 bis 14 ist vorteilhaft, da die Kupplungsgeschwindigkeit sehr hoch sein kann und durch ein Steuern der Viskosität der MRF 11 verstellbar sein kann.

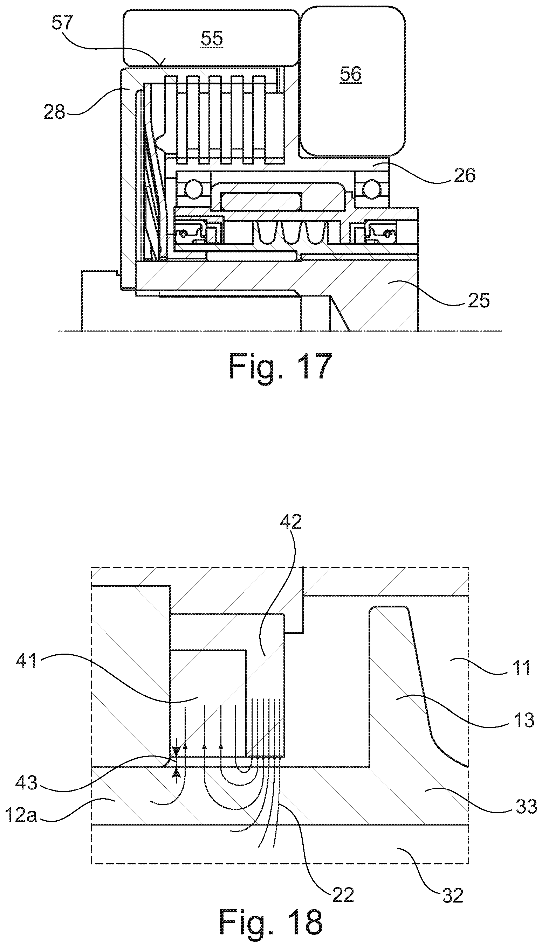

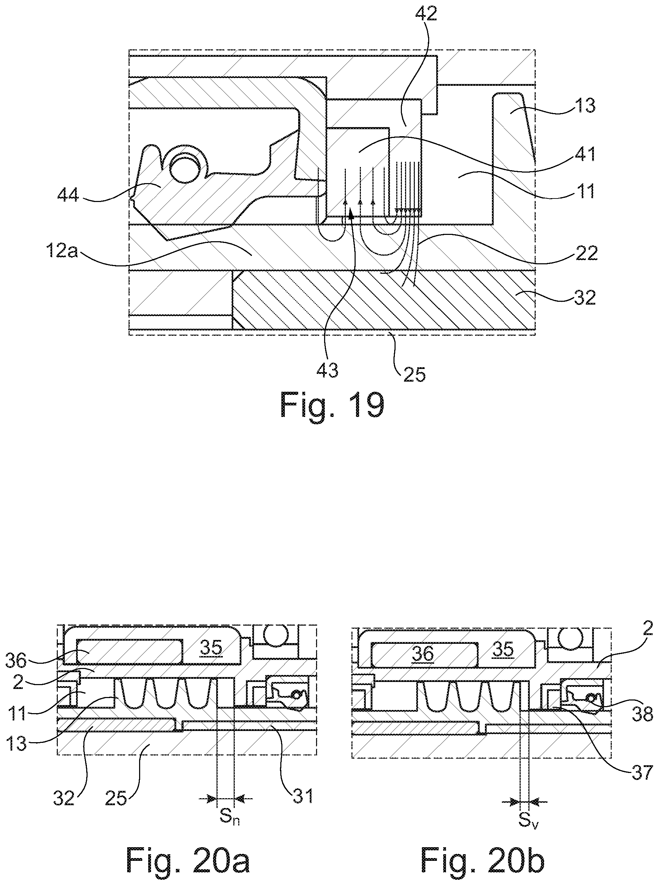

Dichtungskonzepte für die Aktoren und Kupplungen nach der Erfindung sind in den Figuren 18 und 19 im Detail dargestellt. Die polarisierbaren Partikel 15 in der MRF 11 erfordern angepasste Dichtungslösungen, wie beispielsweise Permanentmagnetabdichtungen. Das Prinzip der Permanentmagnetabdichtung liegt in einer Sperrung der polarisierbaren Partikel 15 infolge einer Verfestigung oder einer Kettenbildung in einem abzudichtenden Spalt 43. Dazu wird mittels eines Permanentmagneten 41 im abzudichtenden Spalt 43 ein dauerhaftes Magnetfeld erzeugt, in dem die Partikel Ketten bilden und infolgedessen nicht aus dem Spalt 43 heraus gelangen können. Mittels eines Eisenrings 42 werden die Feldlinien des Permanentmagnetfeldes in der gewünschten Weise im Spalt 43 ausgerichtet. Für den Fall, dass eine solche Permanentmagnetabdichtung unzureichend ist, beispielsweise weil Trägerflüssigkeit weiter durch den Spalt 43 dringen kann, kann diese auch durch eine Radialwellendichtung 44 ergänzt werden. Die Radialwellendichtung 44 ist auf der von der MRF 11 abgewandten Seite der Permanentmagnetdichtung 41 angeordnet, um einen Kontakt mit verschleißenden Partikeln der MRF 11 zu vermeiden. Die in dem Magnetfeld eingefangenen Partikel sollten auf diese Weise die Dichtlippe nicht beschädigen können.

Die Aktoren 1 der Kupplungen haben deren Verschleiß Rechnung zu tragen. Eine diesbezügliche Darstellung ist in den Figuren 20a und 20b gezeigt. Figur 20a zeigt den Aktor einer neuen Kupplung ohne Verschleiß. Das Gewinde 13 ist in axialer Richtung um einen Spalt der Breite $S_n$ beabstandet. Mit Verscheiß der Kupplung 24 wird die Gewindehülse 33 bzw. die Gewindespindel 8 in der Kammer immer weiter entgegen der Zustellrichtung verschoben, also fort vom Kupplungsflansch 28. Der Abstand oder Spalt zwischen dem Gewinde 13 und dem Gehäuse 2 ist daher derart auszulegen, dass die Spindel 33, 8 und das Gewinde 13 nie in eine Anlage an das Gehäuse 2 gelangt. Andernfalls würde die von der Tellerfeder 30 für ein korrektes Kuppeln auf die Lamellen 29 auszuübende Axialkraft nicht mehr auf die Lamellen 29 aufgebracht, sondern über das Gewinde 13 in das Gehäuse 2 geleitet, so dass die Kupplung 24 rutschen würde. Der Aktor 1 einer einem bestimmten Verschleiß unterlegenen Kupplung ist in Figur 20b gezeigt. Dort besitzt der Spalt zwischen Gewinde 13 und Gehäuse 2 nur noch eine Breite von $S_v$.

Die Figuren 16a und 16b zeigen eine alternative Ausführungsform eines Aktors, der zur Betätigung der Kupplung 24 der Figuren 9 bis 17 verwendet werden kann, einmal in einem nicht mit einem Magnetfeld beaufschlagten Zustand (Fig. 16a) und einmal in einem mit einem Magnetfeld beaufschlagten Zustand (Fig. 16b). Die Kupplung 24 kann anstelle des mit Gewindehülse 45 mittels eines Aktors 1, wie er in den Figuren 16a und 16b gezeigt ist, oder mehrerer solcher Aktoren 1 betätigt werden. Der Aktor 1 entspricht im Wesentlichen dem in den Figuren 1 bis 6 gezeigten Aktor 1. In der dargestellten Ausführungsform besteht sein Gehäuse 2 sowie seine Gewindespindel 8 aus einer Aluminiumlegierung. Durch Verwendung eines solchen Aktors 1 kann die Kupplung 24 besonders klein ausgebildet werden.

In Figur 17 ist eine Ausführungsform einer Kupplung 24 gemäß den Figuren 7 und 8 gezeigt, die mit einem Tilger 55 und einem Dämpfer 56 versehen ist. Der Tilger 55 besteht im Wesentlichen aus einem Masseelement, das den Kupplungsflansch 28 in umfänglicher Richtung umgibt und unter Zwischenlage eines Elastomerelements 57 an diesem angeordnet ist. Mittels des Tilgers 55 können bestimmte im Antriebsstrang vorliegenden störende Frequenzen getilgt werden. Der Dämpfer 56 ist an der Riemenscheibe 26 angeordnet und dient einer Dämpfung von Frequenzen im Wesentlichen unabhängig von derem Wert.

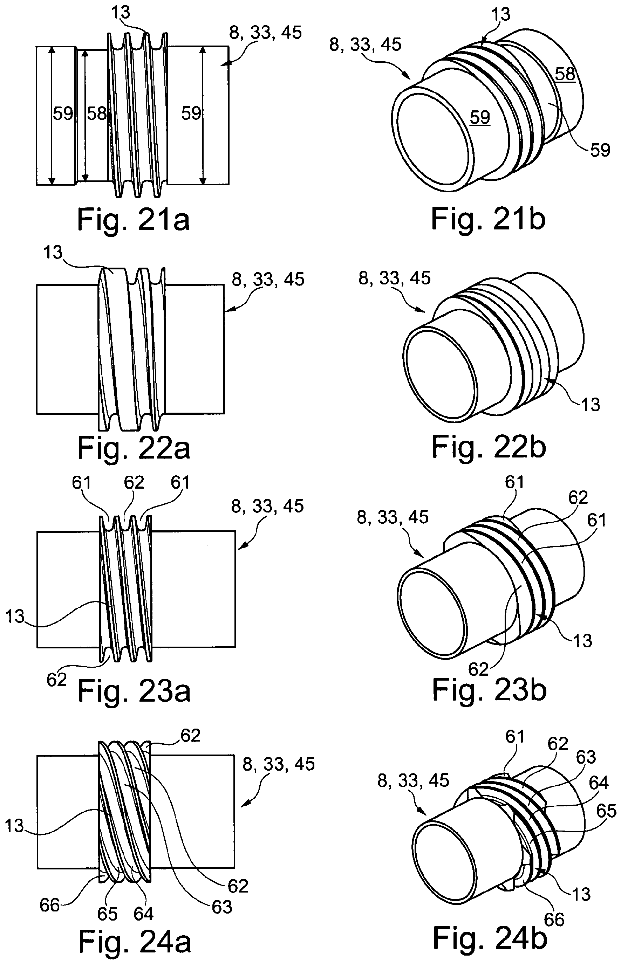

Die Figuren 21a bis 24b zeigen verschiedene Ausführungsformen für Gewinde 13, 51, 52 der Gewindespindel 8 bzw. der Gewindehülse 33 oder 45. Die Figuren 21a und 21b zeigen ein Gewinde, dessen Kerndurchmesser 58 kleiner ist als der Außendurchmesser 59 der Gewindespindel bzw. Gewindehülse. Die Außendurchmesser 59 müssen zur Wahrung eines hydraulischen Gleichgewichts im Aktor 1 beiderseits des Gewindes gleich sein. Mit dieser Variante kann eine schnelle Axialverschiebung Gewindespindel bzw. Gewindehülse und ein schneller Aufbau des Partikelpolsters 40 bewirkt werden, denn mit jeder Umdrehung des Gewindes wird ein relativ großes Volumen (nämlich das eines Gewindegangs) in einen kleinen Spalt im Bereich des Außendurchmessers 59 gefördert. Die Figuren 22a und 22b zeigen ein Gewinde mit nicht linearer Gewindesteigung. Im Bereich einer steilen Gewindesteigung werden in den Gewindegängen befindliche Partikel rasch in axialer Richtung bewegt. Im Endbereich des Gewindes (nahe des Abschnitts 18) ist dessen Steigung flacher, sodass das Gewinde mit einer möglichst flachen Auflage auf dem Partikelpolster 40 abgestützt sein kann. Die Ausführungsform der Figuren 23a und 23b besitzt ein zweigängiges Gewinde mit einem ersten Gang 61 und einem zweiten Gang 62. Die Ausführungsform der Figuren 24a und 24b besitzt ein sechsgängiges Gewinde mit einem ersten Gang 61, einem zweiten Gang 62, einem dritten Gang 63, einem vierten Gang 64, einem fünften Gang 65 und einem sechsten Gang 66. Mehrgängige Gewinde ermöglichen einen schnellen Aufbau des Partikelpolsters 40 infolge einer vervielfachten Gewindesteigung. Die maximale Axialverschiebung ist im Vergleich zu einem eingängigen Gewinde jedoch unverändert.

Die Ausführungsformen der Figuren 21a bis 24b können besonders gut miteinander kombiniert werden. Ein Beispiel für eine solche Kombination ist ein mehrgängiges Gewinde mit variierendem Spindelkerndurchmesser. Eine solche Kombination ist deshalb sinnvoll, da jeder Parameter (Ganganzahl und Kerndurchmesser) einen anderen Einfluss auf die mit dem Gewinde erzielbare Axialverschiebungs-Umdrehungs-Kurve besitzt. Durch gezielte Auswahl der Gewindeparameter ist es daher möglich, die Axialverschiebung, deren Geschwindigkeit und die davon abhängende Auskuppelzeit zu optimieren.

In Figur 25 sind verschiedenen Gewinde mit unterschiedlichen Gewindeparametern vergleichend in einem Axialverschiebungs-Umdrehungs-Diagramm dargestellt. In diesem sind auf der Abszisse die Umdrehungen U aufgetragen, die die Spindel 8 absolviert. Auf der Ordinate ist die dabei von der Spindel 8 infolge ihrer Wechselwirkung mit der MRF 11 zurückgelegte Axialverschiebung S aufgetragen. Das Diagramm zeigt vier verschiedene Axialverschiebungs-Umdrehungs-Kurven. Die Kurve 68 ist die einer Spindel 8 mit einfachem Gewinde 13. Die Kurve 69 ist die einer Spindel 8 mit einem Gewinde 13 mit zwei Gewindegängen (Ausführungsform der Figuren 23a und 23b). Die Kurve 70 ist die einer Spindel 8 mit einem Gewinde 13, wobei die Spindel entsprechend der Ausführungsform der Figuren 21a und 21b verschiedene Durchmesser aufweist. Die Kurve 71 ist die einer Spindel 8 mit einem Gewinde 13 mit zwei Gewindegängen (gemäß der (Ausführungsform der Figuren 23a und 23b) kombiniert mit unterschiedlichen Spindeldurchmessern (Ausführungsform der Figuren 21a und 21b). Das Diagramm der Figur 25 zeigt deutlich, dass die Spindel der Kurve 71 aufgrund ihres schnellen Ansprechverhaltens gegenüber den übrigen Spindeln zu bevorzugen ist.

**Bezugszeichenliste**

| | |
|---|---|
| 1 | Aktor |
| 2 | Gehäuse |
| 3 | Rohr |
| 4 | rechter Deckel |
| 5 | linker Deckel |
| 6 | O-Dichtring |
| 7 | Gleitlager |
| 8 | Gewindespindel |
| 9 | Längsachse |
| 10 | Magnet |
| 11 | magnetorheologische Flüssigkeit |
| 12 | Gewindekern |
| 12a | Gewindekernabschnitt |
| 12b | Gewindekernabschnitt |
| 13 | Gewinde |

| 14 | Trägerflüssigkeit |
|---|---|
| 15 | Magnetisch polarisierbare Partikel |
| 16 | zu betätigende Einheit |
| 17 | Feder |
| 18 | Abschnitt (hinter Gewinde) |
| 19 | Abschnitt (vor Gewinde) |
| 20 | Stempel |
| 21 | Sand |
| 22 | Feldlinien |
| 23 | Bohrung |
| 24 | Kupplung |
| 25 | Motorwelle |
| 26 | Riemenscheibe |
| 27 | Zentralschraube |
| 28 | Kupplungsflansch |
| 29 | Lamellen / Lamellenpaket |
| 30 | Tellerfeder |
| 31 | Axialführung |
| 32 | Gleitlager |
| 33 | Gewindehülse |
| 34 | Lager |
| 35 | Eisenführung |
| 36 | Spule |
| 37 | Permanentmagnetdichtung |
| 38 | Radialwellendichtring |
| 39 | Kammer |
| 40 | Polster |
| 41 | Permanentmagnet |
| 42 | Eisenring |
| 43 | Spalt |
| 44 | Radialwellendichtung |
| 45 | Gewindehülse |
| 46 | Lager |
| 47 | Gehäuse |
| 48 | Kammer |
| 49 | Hülsenabschnitt |
| 50 | Kragen |
| 51 | Innengewinde |
| 52 | Außengewinde |
| 53 | Spule |
| 54 | Masse |
| 55 | Tilger |
| 56 | Dämpfer |
| 57 | Elastomerelement |
| 58 | Kerndurchmesser |
| 59 | Außendurchmesser |
| 60 | Dichtung |
| 61 | erster Gang |
| 62 | zweiter Gang |
| 63 | dritter Gang |
| 64 | vierter Gang |
| 65 | fünfter Gang |
| 66 | sechster Gang |
| 67 | Partikelketten |
| 68 | Kurve Einfachgewinde |
| 69 | Kurve Doppelgewinde |
| 70 | Kurve unterschiedliche Spindelkerndurchmesser |
| 71 | Kurve unterschiedliche Spindelkerndurchmesser |

| B | Magnetfeld |
|---|---|
| Sn | Spalt neu |
| Sv | Spalt verschlissen |
| S | Weg |
| U | Umdrehung |

und Doppelgewinde

**Patentansprüche**

1. Magnetorheologischer Aktor (1) mit einer Kammer (39, 48), in der eine magnetorheologische Flüssigkeit (11) aufgenommen ist, und einem Stellglied (8, 33, 45), das in der Kammer (39, 48) angeordnet ist, wobei das Stellglied (8, 33, 45) eingerichtet ist, eine Betätigungskraft des Aktors auszuüben, wobei das Stellglied (8, 33, 45) eine um ihre Längsachse rotatorisch angetriebene Gewindespindel (8, 33, 45) mit einem Spindelkern (12, 49) und einem darauf befindlichen Gewinde (13) ist, und das Gewinde (13) von der magnetorheologischen Flüssigkeit (11) umgeben ist, **dadurch gekennzeichnet, dass** das Gewinde (13), insbesondere Gewindespitzen des Gewindes, eine Innenwand der Kammer (39, 48) dichtend kontaktiert.

2. Magnetorheologischer Aktor nach Anspruch 1, **dadurch gekennzeichnet, dass** die Gewindespindel (8, 33, 45) in der Kammer (39, 48) in axialer Richtung verschiebbar aufgenommen ist, insbesondere gelagert ist und/oder dass ein Partikelpolster (40) im Betrieb zwangsausbildbar ist, auf dem sich die Gewindespindel abstützt.

3. Magnetorheologischer Aktor nach einem der vorstehenden Ansprüche, **dadurch gekennzeichnet, dass** das Gewinde (13) mehrgängig ist, insbesondere zwei-, drei- oder viergängig.

4. Magnetorheologischer Aktor nach einem der vorstehenden Ansprüche, **dadurch gekennzeichnet, dass** der Innendurchmesser (58) des Gewindes (13) sich vom Durchmesser (59) des Spindelkerns (12) in einem Bereich außerhalb des Gewindes (13) unterscheidet, insbesondere kleiner ist.

5. Kupplung (24) mit einem Aktor (1) nach einem der vorstehenden Ansprüche.

**Claims**

1. A magnetorheological actuator (1) having a chamber (39, 48), in which a magnetorheological fluid (11) is accommodated, and a regulating member (8, 33, 45), which is arranged in the chamber (39, 48), wherein the regulating member (8, 33, 45) is intended to apply an actuating force of the actuator, wherein the regulating member (8, 33, 45) is a threaded spindle (8, 33, 45) rotationally driven about its longitudinal axis having a spindle core (12, 49) and a thread (13) located thereon, and the thread (13) is surrounded by the magnetorheological fluid (11), **characterised in that** the thread (13), in particular threaded tips of the thread contact an inner wall of the chamber (39, 48) in a sealing manner.

2. The magnetorheological actuator according to claim 1, **characterised in that** the threaded spindle (8, 33, 45) is accommodated, in particular is mounted, in the chamber (39, 48) so as to be displaceable in the axial direction and/or **in that** a particle cushion (40) can be forcibly formed during operation, on which the threaded spindle is supported.

3. The magnetorheological actuator according to any one of the preceding claims, **characterised in that** the thread (13) has a multi-start design, in particular a two-start, three-start or four-start design.

4. The magnetorheological actuator according to any one of the preceding claims, **characterised in that** the inner diameter (58) of the thread (13) differs from, in particular is smaller than, the diameter (59) of the spindle core (12) in a region outside the thread (13).

5. A clutch (24) having an actuator (1) according to any one of the preceding claims.

## Revendications

1. Actionneur magnéto-rhéologique (1) comprenant une chambre (39, 48) dans laquelle un fluide magnéto-rhéologique (11) est reçu et un organe de réglage (8, 33, 45) qui est disposé dans la chambre (39, 48), l'organe de réglage (8, 33, 45) étant conçu pour exercer une force de commande de l'actionneur, l'organe de réglage (8, 33, 45) étant une broche filetée (8, 33, 45), avec un noyau de broche (12, 49) et un filetage (13) présent sur celui-ci, entraînée en rotation autour de son axe longitudinal et le filetage (13) est entouré par le fluide magnéto-rhéologique (11), **caractérisé en ce que** le filetage (13), en particulier les sommets de filet du filetage, entre en contact de manière étanche avec une paroi interne de la chambre (39, 48).

2. Actionneur magnéto-rhéologique selon la revendication 1, **caractérisé en ce que** la broche filetée (8, 33, 45) est reçue, en particulier est placée, dans la chambre (39, 48) de manière à être déplaçable dans la direction axiale et/ou **en ce qu'**un coussin de particules (40) peut être formé à force pendant le fonctionnement, sur lequel repose la broche filetée.

3. Actionneur magnéto-rhéologique selon l'une quelconque des revendications précédentes, **caractérisé en ce que** le filetage (13) est multiple, notamment à deux, trois ou quatre filets.

4. Actionneur magnéto-rhéologique selon l'une quelconque des revendications précédentes, **caractérisé en ce que** le diamètre intérieur (58) du filetage (13) diffère du diamètre (59) du noyau de broche (12) dans une zone extérieure au filetage (13), en particulier est plus petit.

5. Couplage (24) présentant un actionneur (1) selon l'une quelconque des revendications précédentes.

Fig. 1

Fig. 2

Fig. 3

Fig. 4

20

21

Fig. 5

23

13

Fig. 6a

8    13

12b    12a

Fig. 6b

Fig. 7

Fig. 8

## Fig. 8a

## Fig. 9

Fig. 10

Fig. 11

Fig. 12

Fig. 13

Fig. 14

Fig. 15

Fig. 16a

Fig. 16b

Fig. 17

Fig. 18

Fig. 19

Fig. 20a

Fig. 20b

Fig. 21a

Fig. 21b

Fig. 22a

Fig. 22b

Fig. 23a

Fig. 23b

Fig. 24a

Fig. 24b

Fig. 25

Fig. 26

Fig. 27a      Fig. 27b      Fig. 27c

Fig. 27d

Fig. 28a

Fig. 28b

Fig. 28c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1438517 B1
- EP 2060800 B1

- WO 0053936 A1
- US 6755290 B